# EUROPÄISCHE PATENTSCHRIFT

(11) **EP 1 226 475 B1**
(45) Veröffentlichungstag und Bekanntmachung des Hinweises auf die Patenterteilung: **24.11.2004**
(21) Anmeldenummer: 00979376.1
(22) Anmeldetag: 22.09.2000
(51) Int. Cl.: G05B 19/05

(54) **VERFAHREN ZUM ERSTELLEN VON LEITTECHNIK-PROGRAMMCODE**
METHOD OF DRAFTING CONTROL AND INSTRUMENTATION TECHNOLOGY
PROCEDE DE MISE AU POINT ISSUE DE LA TECHNIQUE DE CONDUITE DE PROCESSUS

(30) Priorität: 15.10.1999 DE 19949884
(43) Veröffentlichungstag der Anmeldung: 31.07.2002
(73) Patentinhaber: SIEMENS AKTIENGESELLSCHAFT, 80333 München (DE)
(72) Erfinder: HUMPERT, Hans-Dieter, 91334 Hemhofen (DE); KAPINUS, Peter, 91085 Weisendorf (DE); KLEINEN, Heinrich, 91056 Erlangen (DE); KLEYER, Dieter, 91074 Herzogenaurach (DE)
(86) Internationale Anmeldenummer: PCT/DE2000/003319
(87) Internationale Veröffentlichungsnummer: WO 2001/029625

(56) Entgegenhaltungen:
- EP-A- 0 707 248
- EP-A- 0 829 801
- EP-A- 1 061 423
- WO-A-99/23541
- US-A- 5 706 455
- US-A- 5 812 394
- US-A- 5 950 006

## Beschreibung

Die vorliegende Erfindung betrifft ein Verfahren zum Erstellen eines Programmcodes der Leittechnik für den Betrieb einer Anlage mit verfahrenstechnischen Komponenten, wobei der Programmcode eine Vielzahl von Einzelsequenzen umfaßt.

Verfahrenstechnische Komponenten wie Pumpen, Ventile, Behälter sowie Meßwertaufnehmer wurden bisher in einem ersten Plan und der Programmcode der Leittechnik in einem zweiten Plan dargestellt. Zum besseren Verständnis wurden diese beiden Pläne in einem Übersichtsplan zusammengeführt, der manuell erstellt wurde. Nur basierend auf einem solchen Übersichtsplan ist nämlich eine Zusammenarbeit zwischen den verfahrenstechnischen und leittechnischen Bearbeitern möglich.

Der Programmcode der Leittechnik umfaßt in der graphischen Darstellung eine Vielzahl von Unterplänen, insbesondere Funktionspläne der Einzelebene. Diese Unterpläne dienen zum Umsetzen der gewünschten leittechnischen Funktionen wie Regelung, Teil- oder Gruppensteuerung, Schrittsteuerung und Messung sowie Meßwertkorrektur und dergleichen. Die einzelnen Unterpläne weisen entsprechende Software-Bausteine auf, die miteinander verbunden sind. Auch die Unterpläne selbst sind miteinander verknüpft, beispielsweise über definierte Abbruchstellen. Die Unterpläne sind graphische Darstellungen der Einzelsequenzen des Programmcodes.

Der bekannte Übersichtsplan ist eine ausschließlich graphische Darstellung. Konsistenz und Fehlerfreiheit müssen manuell sichergestellt werden. Änderungen im Programmcode der Leittechnik oder den verfahrenstechnischen Komponenten müssen ebenfalls manuell nachvollzogen werden. Die Änderungsverwaltung ist daher aufwendig und fehlerbehaftet. Ein fortlaufendes Anpassen des Programmcodes oder der verfahrenstechnischen Komponenten an Änderungen im Übersichtsplan oder umgekehrt ist praktisch kaum zu realisieren.

Aufgabe der vorliegenden Erfindung ist es daher, ein Verfahren bereitzustellen, mit dem das Erstellen und die Pflege der einzelnen Pläne, insbesondere die Änderungsprojektierung, wesentlich vereinfacht und Fehlerquellen minimiert oder ausgeschlossen werden.

Erfindungsgemäß wird diese Aufgabe bei einem Verfahren der eingangs genannten Art dadurch gelöst, daß Informationen über den Programmcode der Leittechnik, die verfahrenstechnischen Komponenten und deren Verknüpfung in mindestens einem maschinenlesbaren Technologieplan gemeinsam dargestellt werden, daß aus dem mindestens einen Technologieplan automatisch Unterpläne, insbesondere Funktionspläne der Einzelebene, generiert werden, die eine graphische Darstellung der Einzelsequenzen sind, und daß aus den Unterplänen automatisch die Einzelsequenzen des Programmcodes generiert werden.

Nach dem Erstellen des Technologieplans werden die Unterpläne und die Einzelsequenzen des Programmcodes automatisch erstellt, so daß kein manuelles Umsetzen mehr erforderlich ist. Die bisher beim Umsetzen auftretenden Fehler werden somit vollständig vermieden. Das Nachführen der Unterpläne nach Änderungen am Technologieplan ist ohne weiteres möglich, so daß die Änderungsprojektierung wesentlich vereinfacht wird. Weiter sind die relevanten, aktuellen Informationen stets im Technologieplan vorhanden und werden dort angezeigt. Die Zusammenarbeit zwischen den verfahrenstechnischen und leittechnischen Bearbeitern wird wesentlich vereinfacht.

Vorteilhafte Ausgestaltungen und Weiterbildungen der Erfindung gehen aus den abhängigen Ansprüchen hervor.

Vorteilhaft wird der Technologieplan in eine Reihe von Abschnitten unterteilt. Diese Abschnitte strukturieren den Technologieplan und erleichtern das Auffinden bestimmter Positionen. Die Strukturierung ist insbesondere bei großen Technologieplänen hilfreich und verbessert die Übersichtlichkeit.

In vorteilhafter Ausgestaltung wird genau ein Unterplan aus genau einem Abschnitt generiert. Die Grenzen der Unterpläne können somit im Technologieplan festgelegt werden, und der Umfang jedes Unterplans wird genau definiert. Es ist weiter erkennbar, welche Unterpläne miteinander Informationen austauschen, so daß die Signalprojektierung erleichtert wird.

Gemäß einer vorteilhaften Weiterbildung umfaßt jeder Abschnitt eine Reihe von Symbolen, und jedes dieser Symbole wird genau einem Baustein des zugehörigen Unterplans zugeordnet. Die Zahl der Bausteine des Unterplans entspricht somit der Zahl der Symbole im Abschnitt des Technologieplans. Es können weiter zu den standardisierten Bausteinen der Unterpläne standardisierte Symbole für den Technologieplan geschaffen werden.

Vorteilhaft wird aus jedem Unterplan genau eine Einzelsequenz des Programmcodes generiert. Die Einzelsequenzen können somit rasch überpüft werden. Weiter muß die Anzahl der generierten Einzelsequenzen der Anzahl der Unterpläne und damit der Anzahl der Abschnitte im Technologieplan entsprechen, so daß eine einfache Plausibilitätsprüfung vorgenommen werden kann.

Nach einer vorteilhaften Ausgestaltung werden zur besseren Übersichtlichkeit mehrere Symbole und/oder mehrere Abschnitte des Technologieplans kombiniert und zu einem Plansymbol zusammengefaßt. Dies wird als "Plan im Plan" bezeichnet. Das Plansymbol wird durch eine geeignete Aktion in die zugrundeliegenden Symbole und/oder Abschnitte aufgeteilt. Diese können dann direkt im Technologieplan überprüft und gegebenenfalls verändert werden. Selbstverständlich sind mehrere Ebenen von Plansymbolen möglich. Die Plansymbole verbessern die Übersicht, da beispielsweise bereits abgearbeitete Abschnitte des Technologieplans in einem charakteristischen Plansymbol zusammengefaßt werden können. Die graphische Darstellung des Technologieplans wird hierdurch wesentlich vereinfacht, und zum aktuellen Zeitpunkt nicht erforderliche Informationen werden nicht dargestellt.

Vorteilhaft werden in dem Technologieplan enthaltene Symbole mit einer Identifikation versehen. Diese Identifikation ist entweder anlagenweit oder bezogen auf den Technologieplan eindeutig. Sie ermöglicht ein eindeutiges Zuordnen der Symbole zu den Bausteinen der Unterpläne.

In vorteilhafter Ausgestaltung wird der Technologieplan einer Plausibilitätsprüfung unterzogen. Bei der Projektierung auftretende Fehler werden erkannt und könne sofort behoben werden.

Nach einer vorteilhaften Weiterbildung wird eine Konsistenzprüfung zwischen den einzelnen Unterplänen und zwischen den Unterplänen und dem Technologieplan vorgenommen. Im Rahmen der Konsistenzprüfung werden Fehler oder Lücken in der Projektierung erkannt, und es wird eine entsprechende Meldung ausgegeben.

Vorteilhaft wird der Technologieplan mit mindestens einer Schnittstelle zum Verbindungen mit anderen Engineeringsystemen versehen. Somit können Informationen aus anderen Engineeringsystemen in den Technologieplan importiert werden. Selbstverständlich ist auch ein Exportieren von Informationen aus dem Technologieplan zu anderen Engineeringsystemen möglich. Bereits vorhandene Informationen können somit rasch, ohne Aufwand und ohne Übertragungsfehler in den Technologieplan importiert werden. Weiter können einzelne Teile des Technologieplans zur Bearbeitung an andere Engineeringsysteme exportiert werden und nach der Bearbeitung wieder in den Technologieplan importiert werden. Darüber hinaus ist der Austausch von Informationen zwischen nicht kompatiblen Engineeringsystemen mit Hilfe des Technologieplans möglich.

Gemäß einer vorteilhaften Ausgestaltung werden in dem Technologieplan enthaltene Informationen graphisch dargestellt. Zur Darstellung dieser Informationen werden vorteilhaft graphische Symbole in den Technologieplan importiert. Es könne somit aussagekräftige, selbsterklärende Symbole verwendet werden. Diese Symbole können von den Bearbeitern selbst ausgewählt oder erstellt und in den Technologieplan importiert werden. Die Übersichtlichkeit wird hierdurch wesentlich verbessert.

In vorteilhafter Weiterbildung wird nur ein Teil der in dem Technologieplan enthaltenen Informationen graphisch dargestellt. Ein Überfrachten des Technologieplans mit Information, das die Übersichtlichkeit stark beeinträchtigt, wird zuverlässig vermieden. Durch eine geeignete Aktion eines Anwenders werden diese graphisch nicht dargestellten Informationen aufgerufen und angezeigt. Diese Informationen können dann überprüft und gegebenenfalls verändert sowie abgespeichert werden. Nach Abschluß der Bearbeitung wird die Anzeige wieder geschlossen, so daß die Übersichtlichkeit des Technologieplans erneut gegeben ist.

Vorteilhaft wird in den Technologieplan nur ein Teil der zum vollständigen Generieren der Unterpläne und Einzelsequenzen erforderlichen Informationen aufgenommen. Die Unterpläne enthalten Detailinformationen wie beispielsweise Überwachungszeiten, Schwellenwerte und ähnliche Größen, die in vielen Fällen zum Zeitpunkt der Erstellung des Technologieplans noch nicht feststehen. Diese Informationen sind weiter für den Technologieplan nicht relevant, da sie lediglich Details der Leittechnik betreffen und die Grundstruktur der Leittechnik nicht beeinflussen. Diese Informationen können häufig erst dann eingegeben werden, wenn die Grundstruktur des Programmcodes der Leittechnik festgelegt worden ist. Erfindungsgemäß wird der Technologieplan daher unter Verzicht auf diese Informationen erstellt, und diese Informationen werden anschließend nachgetragen. Das Nachtragen kann entweder im Technologieplan oder direkt in den einzelnen Unterplänen oder Einzelsequenzen vorgenommen werden.

Nach einer vorteilhaften Weiterbildung werden beim Generieren der Unterpläne Lücken der in dem Technologieplan enthaltenen Informationen erkannt und angezeigt. Hierdurch wird sichergestellt, daß die Unterpläne vollständig generiert und projektiert werden.

Nachstehend wird die Erfindung anhand von Ausführungsbeispielen näher erläutert, die schematisch in der Zeichnung dargestellt sind. Für gleiche oder funktionsidentische Elemente in der Zeichnung werden dieselben Bezugszeichen verwendet. Dabei zeigt:
- FIG 1: eine schematische Darstellung des erfindungsgemäßen Verfahrens in erster Ausführungsform;
- FIG 2: eine schematische Darstellung eines Technologieplans;
- FIG 3: eine vergrößerte Darstellung eines Abschnitts aus dem Technologieplans gemäß Figur 2;
- FIG 4: eine Darstellung eines Funktionsplans;
- FIG 5: die Darstellung einer Schrittsteuerung im Technologieplan;
- FIG 6: eine vergrößerte Darstellung eines Einzelschritts aus Figur 5;
- FIG 7: eine schematische Darstellung der Signalprojektierung;
- FIG 8: den hierarchischen Aufbau der Leittechnik;
- FIG 9: eine Darstellung einer Meldung;
- FIG 10: eine schematische Darstellung der Informationsübergabe zwischen Technologieplan und Unterplan; und
- FIG 11: eine schematische Darstellung einer zweiten Ausführungsform des erfindungsgemäßen Verfahrens.

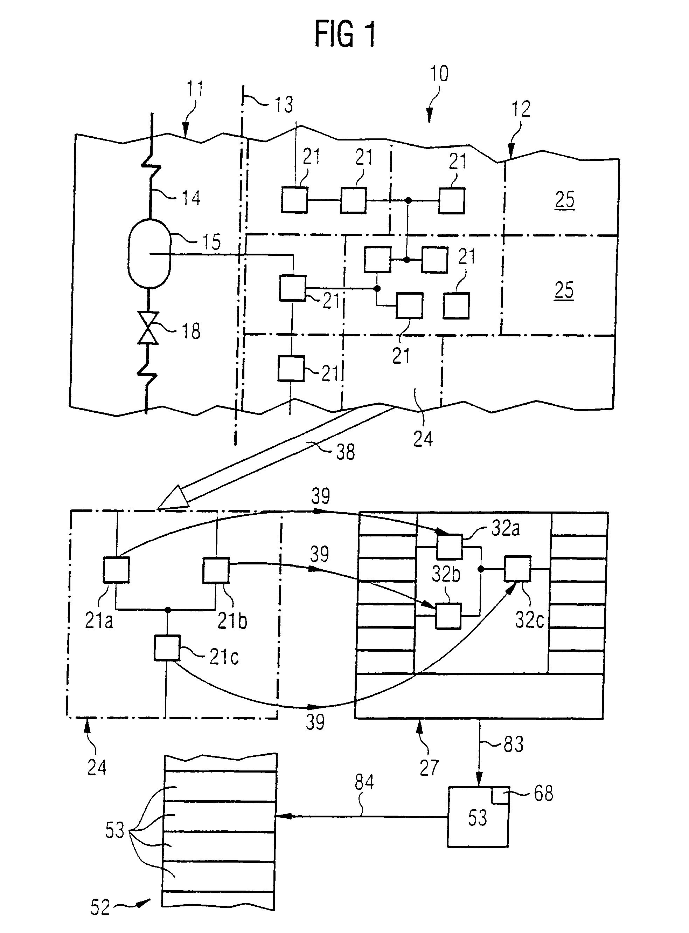

Figur 1 zeigt eine schematische Darstellung des erfindungsgemäßen Verfahrens. Es ist ein Technologieplan 10 vorgesehen, der sowohl einen Plan 11 der Verfahrenstechnik als auch einen Plan 12 eines Programmcodes 52 der Leittechnik enthält. Die Trennung zwischen den beiden Plänen 11, 12 ist schematisch durch die Strichlinie 13 angedeutet.

Der Plan 11 der Verfahrenstechnik enthält eine Reihe von verfahrenstechnischen Komponenten. In Figur 1 sind schematisch ein Rohr 14, ein Behälter 15 und ein Ventil 18 dargestellt. Diese Komponenten 14, 15, 18 bilden eine Anlage.

Der Plan 12 des Programmcodes 52 ist in eine Reihe von Abschnitten 24, 25 unterteilt. Die Unterteilung ist mit Strichpunktlinien angedeutet. Diese Abschnitte 24, 25 umfassen jeweils eines oder mehrere Symbole 21, die miteinander verknüpft sind. Die Symbole 21 und ihre Verknüpfung stellen den zum Betrieb der Anlage erforderlichen Programmcode 52 der Leittechnik schematisch dar.

Erfindungsgemäß ist der Technologieplan 10 maschinenlesbar. Aus jeweils einem Abschnitt 24, 25 wird ein Funktionsplan 27 erstellt. Dies ist schematisch anhand des Abschnitts 24 dargestellt.

Der Abschnitt 24 wird zunächst gemäß Pfeil 38 als eigener Abschnitt des Technologieplans 10 identifiziert. Anschließend wird jedem Symbol 21a, 21b, 21c des Abschnitts 24 genau ein Baustein 32a, 32b, 32c des zugeordneten Funktionsplans 27 zugeordnet. Dies ist schematisch durch die Pfeile 39 angedeutet. Die Verknüpfung zwischen den einzelnen Symbolen 21a, 21b, 21c wird ebenfalls in den Funktionsplan 27 übertragen. Der Funktionsplan 27 kann somit automatisch aus dem Technologieplan 10 generiert werden.

Aus dem Funktionsplan 27 wird anschließend gemäß Pfeil 83 eine Einzelsequenz 53 des Programmcodes 52 generiert. Die Bausteine 32 des Funktionsplans 27, deren Verknüpfung sowie Abbruchstellen werden automatisch in die entsprechenden Anweisungen der Einzelsequenz 53 umgesetzt. Es wird aus jedem Funktionsplan 27 genau eine Einzelsequenz 53 generiert. Die generierten Einzelsequenzen 53 werden in dem Programmcode 52 zusammengeführt wie schematisch durch Pfeil 84 dargestellt.

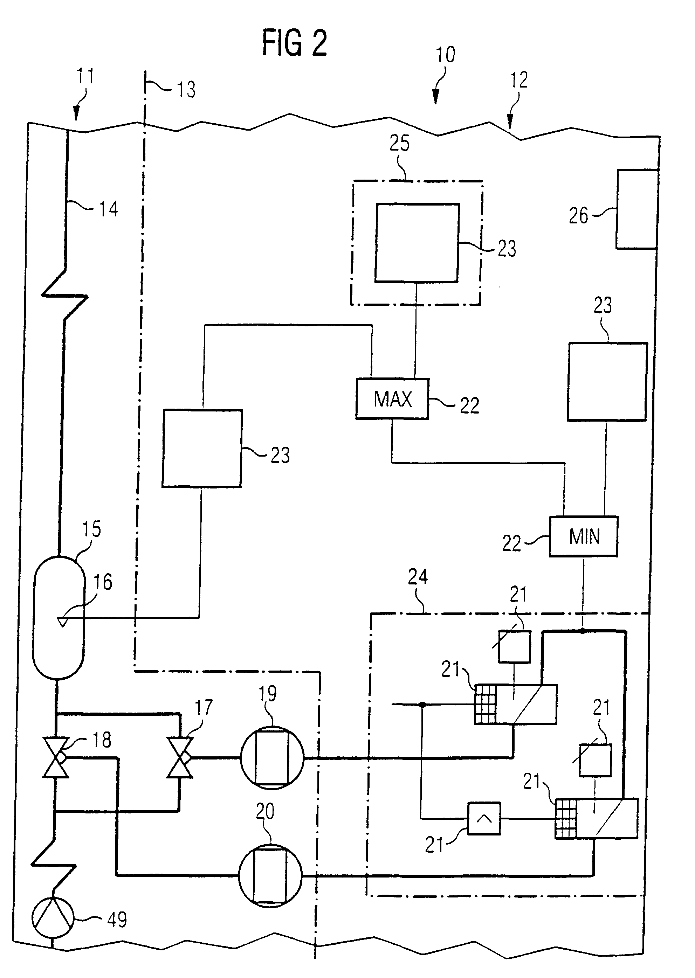

Die Figuren 2 bis 4 zeigen schematisch eine größere Darstellung eines weiteren Technologieplans 10, eines weiteren Abschnitts 24 sowie des zugeordneten Funktionsplans 27. Der Technologieplan 10 gemäß Figur 2 beschreibt schematisch eine Regelung für den Wasserstand im Behälter 15. Zu diesem Zweck sind ein Füllstandssensor 16 sowie zwei Stellventile 17, 18 mit zugeordneten Einzelsteuergliedern für Stellmotoren 19, 20 vorgesehen. In Abhängigkeit vom Signal des Füllstandssensor 16 werden die Stellventile 17, 18 und durch die Stellmotoren 19, 20 betrieben. Die Wasserzufuhr erfolgt über eine Pumpe 49.

Der Plan 12 des Programmcodes 52 gemäß Figur 2 weist außer dem Abschnitt 24 noch eine Reihe von Komparatoren 22 sowie Plansymbole 23 und eine eindeutige Identifikation 26 auf. Die Plansymbole 23 stellen eine graphisch verkleinerte Darstellung mehrerer Symbole 21 und/oder mehrerer Abschnitte 24, 25 dar. Die in diesen Symbolen 21 und Abschnitten 24, 25 enthaltene Information wird in dem Technologieplan 10 gemäß Figur 2 nicht mehr detailliert dargestellt. Hierdurch wird die Übersichtlichkeit wesentlich erleichtert.

Zur detaillierten Darstellung der in dem Plansymbol 23 enthaltenen Information wird vom Bediener eine geeignete Aktion durchgeführt. Insbesondere bei einer Projektierung direkt am Bildschirm bietet sich ein Doppelklick mit der linken Maustaste auf das jeweils gewünschte Plansymbol 23 zum Darstellen der detaillierten Information an.

Es können mehrere Ebenen von derartigen Plansymbolen 23 übereinander geschaltet werden. Weiter kann ein kompletter Abschnitt 25 zu einem einzigen Plansymbol 23 zusammengefaßt werden.

Zur Darstellung der Symbole 21, Komparatoren 22 sowie Plansymbole 23 können entweder vorhandene graphische Elemente genutzt oder eigene graphische Elemente erstellt und in den Technologieplan 10 importiert werden.

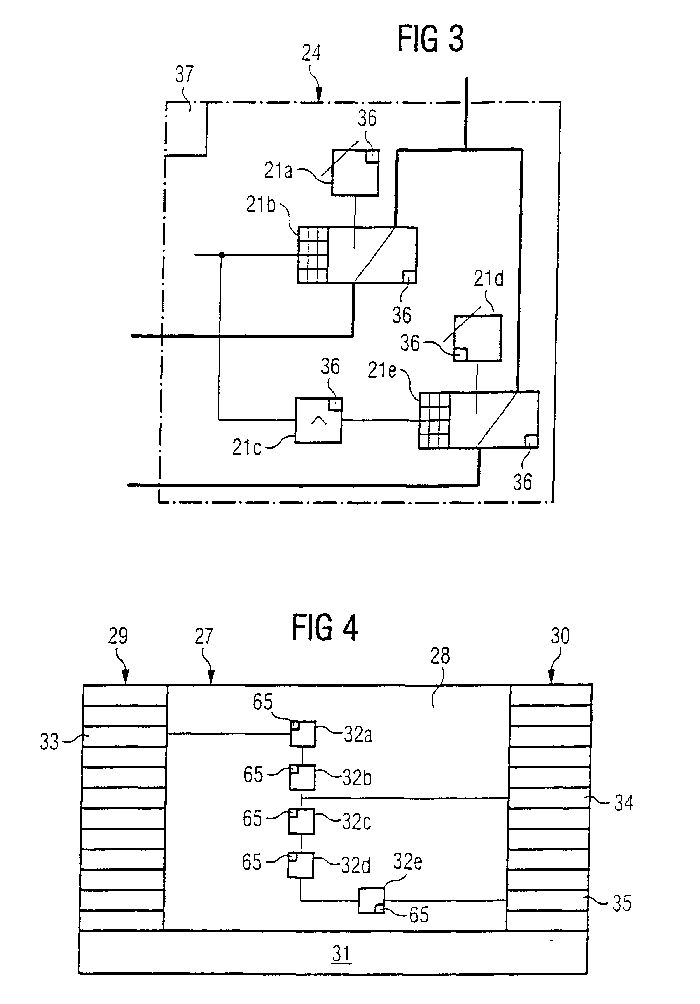

Der in Figur 3 dargestellte Abschnitt 24 entspricht dem in Figur 4 dargestellten Funktionsplan 27. Zur eindeutigen Zuordnung sind sowohl der Abschnitt 24 als auch der Funktionsplan 27 mit einer Identifikation 37, 31 versehen. Auch die Symbole 21 des Abschnitts 24 und die Bausteine 32 des Funktionsplans 27 weisen eine entsprechende Identifikation 36, 65 auf.

Der Funktionsplan 27 umfaßt einen Verknüpfungsbereich 28, in dem die einzelnen Bausteine 32 dargestellt und miteinander verbunden sind. Er ist weiter mit einer Tabelle 29 für Eingangssignale 33 und einer Tabelle 30 für Ausgangssignale 34, 35 versehen. Mittels der Identifikationen 31, 37 des Funktionsplans 27 und des Abschnitts 24 sowie der Identifikationen 36, 65 der Symbole 21 und der Bausteine 32 ist eine eindeutige Zuordnung vom Technologieplan 10 zu dem Funktionsplan 27 gegeben. Die Eingangssignale 33 und Ausgangssignale 34, 35 werden über geeignete Abbruchstellen eindeutig festgelegt.

Es wird bereits im Technologieplan 10 durch die Grenzen der Abschnitte 24, 25 festgelegt, welche Signale zwischen den Funktionsplänen 27 ausgetauscht werden. Die Anzahl dieser Signale kann erfaßt und anschließend für eine Plausibilitätsund Konsistenzprüfung des Technologieplans 10 und der Funktionspläne 27 verwendet werden.

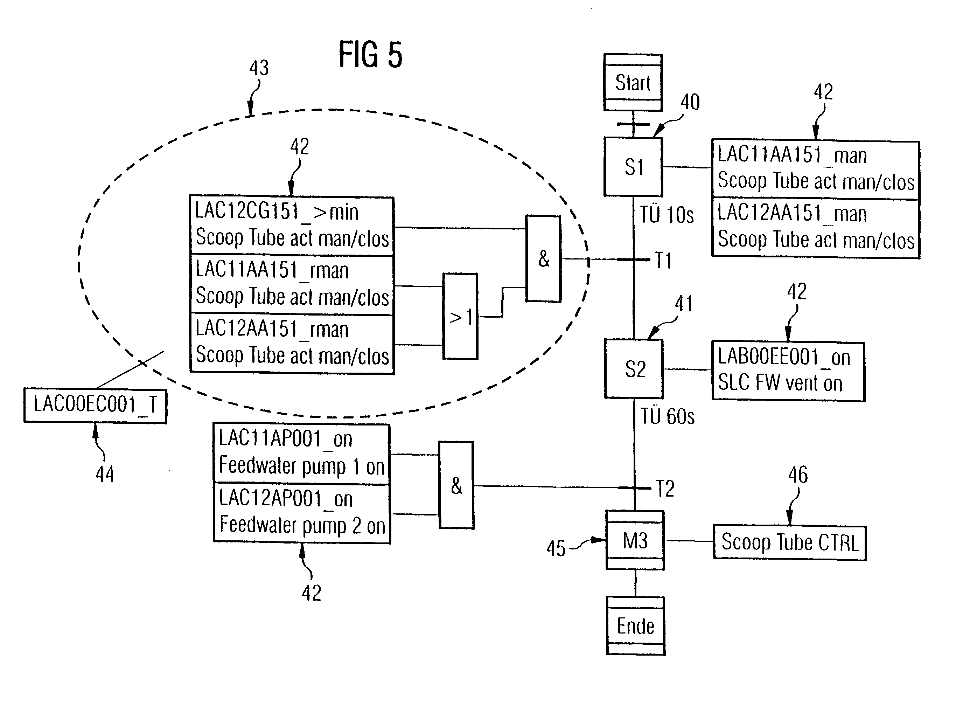

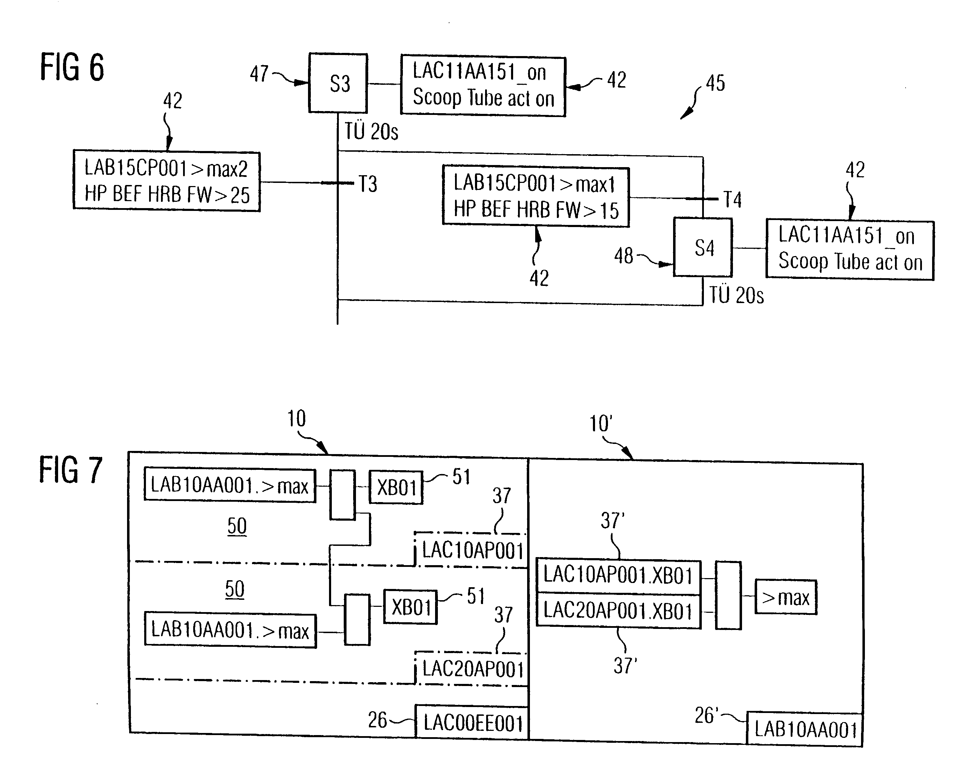

In den Figuren 5 und 6 ist schematisch der Technologieplan einer Schrittsteuerung dargestellt. Die Schrittsteuerung umfaßt drei Schritte 40, 41, 45, die übersichtlich dargestellt sind. Es kann eine beliebig große Anzahl von Schritten dargestellt werden. Zu jedem Schritt 40 sind Verweise 42 mit Definitionen von Abbruchstellen dargestellt. Die Transition T₁ bezeichnet den Übergang zwischen den Schnitten 40 und 41. Die Transitionsbedingung besteht aus der Verknüpfung 43. Diese kann einem eigenen Abschnitt 44 zugeordnet werden. Die Verknüpfung 43 wird als eigener Funktionsplan 27 projektiert. Für die definierten Planabschnitte wird somit ein eigener Funktionsplan erzeugt. Die Logik kann damit beliebig komplex aufgebaut werden, und es können auch speichernde Bausteine wie Timer oder FlipFlop's genutzt werden.

In Figur 6 ist eine vergrößerte Darstellung des Makroschritts 45 angegeben. Der Makroschritt 45 umfaßt zwei Schritte 47, 48, denen jeweils ein entsprechender Verweis 42 zugeordnet werden. Die Vergrößerung wird bei der Projektierung am Bildschirm beispielsweise durch einen Doppelklick auf den Schritt 45 in Figur 5 aufgerufen. Nach Abschluß der Projektierung des Makroschritts 45 im Technologieplan wird die Vergrößerung wieder geschlossen, so daß sich die übersichtliche Darstellung von Figur 5 ergibt.

Entsprechend den Figuren 2 und 3 werden auch Verknüpfungslogiken wie Teil- und Gruppensteuerung oder Meßwertkorrekturen dargestellt. Dies ist durch die automatische Generierung der Funktionspläne 27 aus dem Technologieplan 10 möglich. Die gesamte leittechnische Aufgabenstellung kann somit durchgängig im Technologieplan 10 erfaßt werden.

Die zugehörige Signalprojektierung ist schematisch in Figur 7 dargestellt. In der linken Hälfte ist ein erster Technologieplan 10 und in der rechten Hälfte ein zweiter Technologieplan 10' dargestellt. Im Technologieplan 10 sind eindeutige Abbruchstellen 51 pro Planabschnitt 50 definiert. Zur weiteren Kennzeichnung ist darüber hinaus eine Identifikation 26, 26' pro Technologieplan 10, 10' vorgesehen. Verweise auf die definierten Signale werden aus der Identifikation 37 für den Planabschnitt 50 und dem Signalbezeichner gebildet. Auf dem Technologieplan 10' wird auf die im Technologieplan 10 gebildeten als Abruchstellen dienenden Signale 51 ergänzt und mit der über 37' gebildeten Planbezeichnung verwiesen. Der Technologieplan 10' selbst weist ebenfalls eine Identifikation 26' auf. Durch eine geeignete Aktion kann aus dem Technologieplan 10' der ursprüngliche Technologieplan 10 aufgerufen und gegebenenfalls verändert werden.

Verbindungen zwischen einzelnen Symbolen 21 im Technologieplan 10, die sich über die Grenzen von Abschnitten 24, 25 hinweg erstrecken, entsprechen in den Funktionsplänen 27 planübergreifenden Abbruchstellen 50, wie sie auch bei manueller Verschaltung zwischen zwei Bausteinen 32 unterschiedlicher Funktionspläne 27 entstehen.

Selbstverständlich können mehrere Technologiepläne 10' erneut zu einem weiteren Technologieplan 10" zusammengefaßt werden. Auf diese Weise ergeben sich die Plansymbole 23, die eine übersichtliche Darstellung ermöglichen.

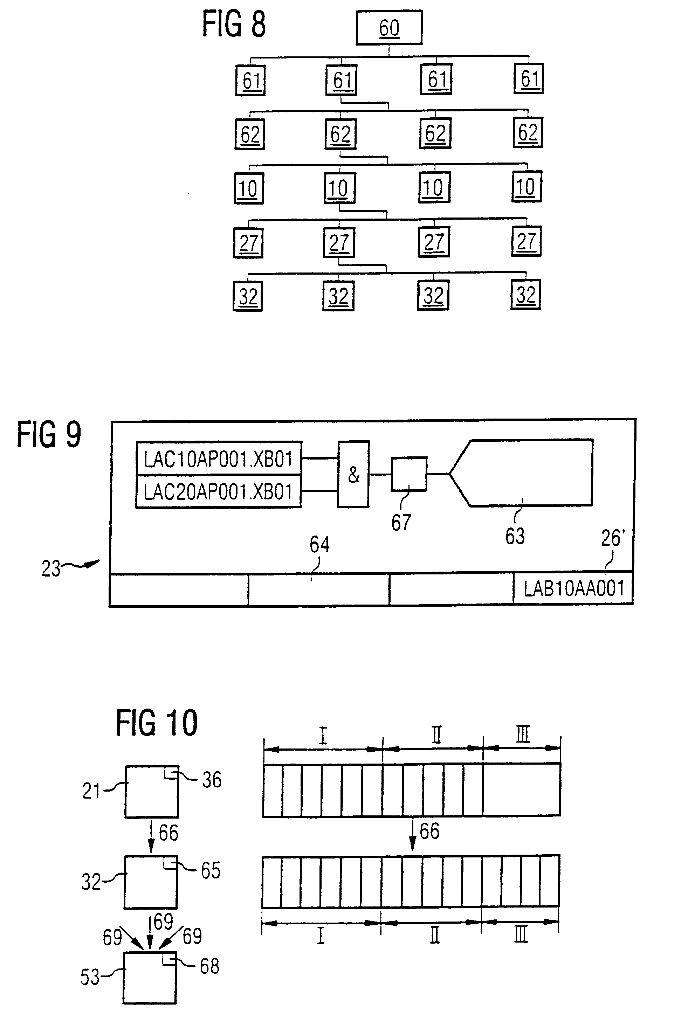

Figur 8 zeigt schematisch den hierarchischen Aufbau des verwendeten Programmcodes 52 der Leittechnik. Innerhalb einer Anlage 60 kann eine beliebige Anzahl von Hierachieebenen definiert werden. Jedem Hierachieknoten können ein oder mehrere Technologiepläne 10 zu geordnet werden, deren Abschnitte 24, 25 jeweils Funktionsplänen 27 der Einzelebene entsprechen. Die Funktionspläne 27 wiederum umfassen einen oder mehrere Bausteine 32. Die Funktionspläne 27 und ihre Bausteine 32 können über ihre Identifikation 31, 65 eindeutig einen bestimmten Abschnitt 24, 25 eines Technologieplans 10 zugeordnet werden. Der Abschnitt 24, 25 wird eindeutig über die Identifikation 37 gekennzeichnet. Hierdurch wird eine Zuordnung zu dem jeweiligen Technologieplan 10 möglich, der wiederum über die Identifikation 26 gekennzeichnet ist.

Für die Technologiepläne 10 wird vorzugsweise eine Identifikation 26 verwendet, die sich über die gesamte Anlage 60 erstreckt. Hierdurch können eindeutige Verknüpfungen zwischen unterschiedlichen Technologieplänen 10 vorgenommen werden, die nicht demselben Funktionskennzeichen 62 oder demselben Automatisierungssystem 61 zugeordnet sind. Diese Verknüpfungen können sich somit über die gesamte Anlage 60 erstrecken.

In Figur 9 ist schematisch eine Meldung dargestellt. Verknüpfte Meldungen werden vollständig im Technologieplan 10 projektiert, da hier die zugehörige Verknüpfungslogik dargestellt wird. Die Meldung selbst wird durch ein eigenes Symbol 67 repräsentiert, dem bei der Generierung der Funktionspläne 27 genau ein Meldebaustein zugeordnet wird. In Abhängigkeit vom Meßergebnis beziehungsweise von der Verknüpfung erfolgt eine Ausgabe 63, deren einzelne Meldeattribute direkt dem Technologieplan 10 projektiert werden können. Zusätzlich ist eine Projektierung in anderen Feldern vorgesehen. Das zugehörige Plansymbol 23 enthält neben der Identifikation 26' noch eine Bezeichnung 64.

Bei der Projektierung von Meldungen wird zwischen unterschiedlichen Typen unterschieden. Standardmäßig hinterlegte Meldungen wie Status- und Ausfallmeldungen sind Bestandteile der Leittechnik-Systemkomponenten. Diese Meldungen sind Bestandteil der Leittechnik 12 und können im Technologieplan 10 nicht manipuliert werden. Hier auftretende Fehlermeldungen müssen von den übrigen Fehlermeldungen getrennt und gezielt zur Verfügung gestellt werden können. Falls Ausfallmeldungen mit Relevanz für die Betriebsführung auftreten, müssen diese dem Operateur der Anlage 60 mitgeteilt werden, da dieser auf Einschränkungen der Verfügbarkeit oder Kannlasteinschränkungen reagieren muß. Die entsprechenden Meldungen werden im Technologieplan 10 projektiert. Dies trifft auch für Meldungen zu, die Ausfälle von Steuerungs- und Regelungsfunktionen betreffen. Die einzelnen Meldungen sind Aufforderungen an den Operateur bestimmte Handlungen vorzunehmen. Die jeweils vorzunehmende Handlungen sind im allgemeinen im Betriebshandbuch abgelegt. Vorteilhaft wird daher jeder Meldung eine Abbruchstelle zum Betriebshandbuch zugeordnet, um einen raschen Zugriff zu ermöglichen.

In Figur 10 ist schematisch die Übergabe der Informationen zwischen einem Technologieplan 10 und einem Funktionsplan 27 dargestellt. Jedem Symbol 21 des Technologieplans 10 sind verschiedene Informationen zugeordnet, die schematisch durch die Teilbereiche I, II dargestellt sind. Die Informationen aus dem Teilbereich I werden im Technologieplan 10 dargestellt, während die Informationen aus dem Teilbereich II unterdrückt werden. Hierdurch wird die Übersichtlichkeit erhöht. Der Teilbereich III dient zum Aufnehmen von Informationen, die im Technologieplan 10 nicht enthalten sind. Diese Informationen betreffen Details der Leittechnik, die für das Grundkonzept nicht relevant und beim Erstellen des Technologieplans 10 in vielen Fällen noch nicht bekannt oder nicht endgültig festgelegt sind. Es läßt sich allerdings eindeutig bestimmen, welche Informationen für das Generieren des zugeordneten Funktionsplans 27 noch erforderlich sind, so daß entsprechend Speicherplatz und Abbruchstellen 50 bereitgestellt werden können.

Mit dem Zuordnen des Symbols 21 zu dem Baustein 32 des jeweiligen Funktionsplans 27 über die Identifikation 36, 65 gemäß Pfeil 66 werden automatisch die Informationen aus den Teilbereich I, II an den Funktionsplan 27 übergeben. Gleichzeitig wird angezeigt, daß im Teilbereich III noch Informationen nachgetragen werden müssen. Dies geschieht manuell direkt im Funktionsplan 27 oder im Technologieplan 10 unmittelbar vor dem Generieren. Nach dem Nachtragen dieser Informationen wird automatisch die zugeordnete Einzelsequenz 53 generiert. Zur Zuordnung ist jede Einzelsequenz 53 mit einer Identifikation 68 versehen. Zum Generieren der Einzelsequenz 53 wird auf mehrere Bausteine 32 zurückgegriffen, wie schematisch durch Pfeile 69 dargestellt ist.

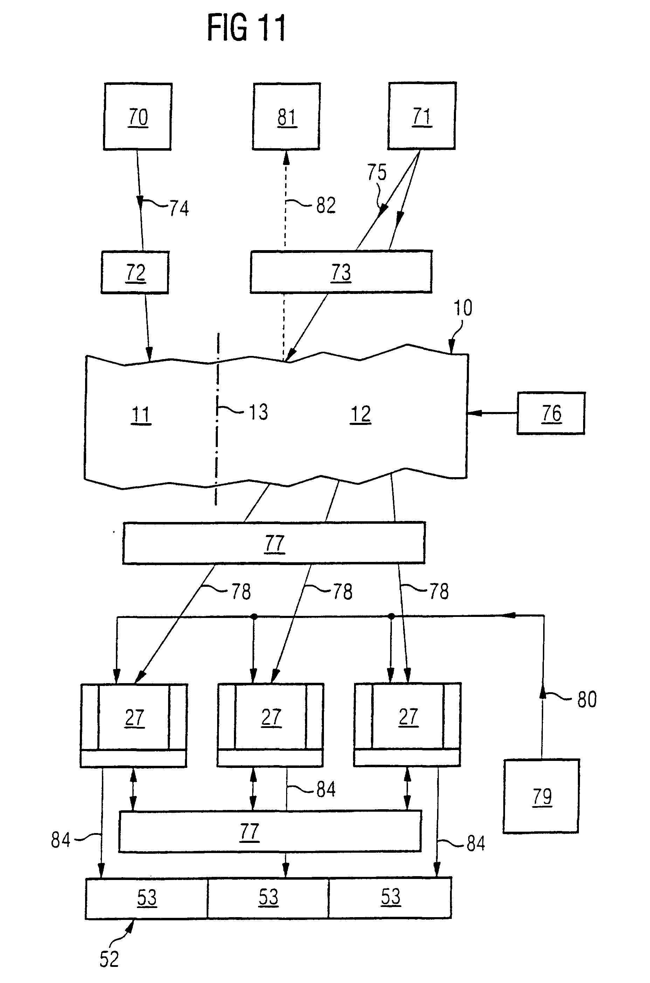

Figur 11 zeigt schematisch eine weitere Ausführungsform des erfindungsgemäßen Verfahrens. Der Technologieplan 10 weist zwei Schnittstellen 72, 73 zum Importieren von Informationen aus weiteren Engineeringsystemen 70, 71 gemäß Pfeil 74, 75 auf. Die Verfahrenstechnik und die Leittechnik werden in diesen Engineeringsystemen 70, 71 vorprojektiert und anschließend in dem Technologieplan 10 zusammengeführt. Es bietet sich an, hierbei bekannte Engineeringsysteme 70, 71 zu verwenden. Selbstverständlich können auch Informationen aus dem Technologieplan 10 in eines oder mehrere Engineeringsysteme 81 exportiert werden, wie durch den Pfeil 82 angedeutet.

Nach dem Importieren der Informationen wird der Technologieplan 10 einer Plausibilitätsprüfung 76 unterworfen. Diese Plausibilitätsprüfung 76 wird vorteilhaft auch nach Änderungen am Technologieplan 10 durchgeführt. Nach Abschluß der Projektierung werden gemäß den Pfeilen 78 automatisch die Funktionspläne 27 generiert. Beim Generieren wird eine Konsistenzprüfung 77 vorgenommen, beispielsweise anhand der definierten Abbruchstellen 50 sowie der jeweils verwendeten Identifikationen. Diese Konsistenzprüfung 77 wird auch zwischen den einzelnen Funktionsplänen 27 durchgeführt.

Falls der Technologieplan Lücken gemäß dem Teilbereich III aus Figur 10 aufweist, werden diese manuell über ein Interface 79 gemäß Pfeil 80 eingegeben. Alternativ können die für das vollständige Generieren der Funktionspläne 27 erforderlichen Informationen aus einer Bibliothek abgerufen werden.

Nach dem Vervollständigen der Funktionspläne 27 werden automatisch die jeweils zugeordneten Einzelsequenzen 53 erzeugt und in dem Programmcode 52 der Leittechnik zusammengeführt.

Das erfindungsgemäße Verfahren ermöglicht die Darstellung von Plänen 11 der Verfahrenstechnik und Plänen 12 der Leittechnik in einem gemeinsamen Technologieplan 10. Der Technologieplan 10 kann durch das Importieren von Informationen rasch, einfach und fehlerfrei an Änderungen angepaßt werden, die in weiteren Engineeringsystemen 70, 71 vorgenommen werden. Die Zusammenarbeit zwischen den verfahrenstechnischen und leittechnischen Bearbeitern wird jedoch wesentlich erleichtert. Nach Erstellen des Technologieplans 10 werden erfindungsgemäß automatisch die erforderlichen Funktionspläne 27 der Einzelebene generiert. Ein manuelles Umsetzen und eine manuelle Anderungsprojektierung sind nicht mehr erforderlich, so daß bisher auftretende Fehler beim Erstellen der Funktionspläne 27 vollständig ausgeschlossen werden. Detailinformationen, die für die Zusammenarbeit zwischen dem verfahrenstechnischen und leittechnischen Bearbeiten nicht erforderlich sind, können zu einem späteren Zeitpunkt im Technologieplan und/oder in den automatisch generierten Funktionsplänen 27 nachgetragen werden.

Außer der reinen Information für die Pläne 11, 12 können weiter graphische Symbole aus den Engineeringsystemen 70, 71 importiert oder selbst erstellt werden. Hierdurch wird eine individuelle Anpassung an die jeweiligen Bearbeiter ermöglicht, so daß die Übersichtlichkeit nochmals verbessert wird.

## Patentansprüche

1. Verfahren zum automatischen Erstellen eines Programmcodes (52) der Leittechnik für den Betrieb einer Anlage mit verfahrentechnischen Komponenten (14,15,16,...,20), wobei ein maschinenlesbarer Technologieplan (10) der Anlage vorgesehen ist, welcher sowohl einen graphischen Plan (11) der Verfahrenstechnik als auch einen graphischen weiteren Plan (12) des Programmcodes (52) enthält wobei der weitere Plan (12) in eine Anzahl von Abschnitte (24,25) unterteilt ist, welche jeweils ein oder mehrere untereinander verknüpfte Symbole (21) umfassen, die den zu erstellenden Programmcode (52) schematisch darstellen, **gekennzeichnet durch** folgende Schritte:
a) jedem Symbol (21a,21b,21c) eines Abschnitts (24,25) wird automatisch ein Funktionsbaustein (32a,32b,32c) zugeordnet, wobei aus der Verknüpfung der Symbole (21a,21b,21c) die Verknüpfung der Funktionsbausteine (32a,32b,32c) automatisch festgelegt wird, so daß ein Funktionsplan (27) des Abschnitts (24,25) des weiteren Plans (12) aus den Funktionsbausteinen (32a,32b,32c) und deren Verknüpfungen gebildet ist,
b) gemäß Schritt a) wird für jeden Abschnitt (24,25) jeweils eine Einzelsequenz (53) des Programmcodes (52) automatisch erzeugt,
c) aus jedem Funktionsplan (27) wird jeweils eine Einzelsequenz (53) des Programmcodes (52) automatisch erzeugt, und
d) die Einzelsequenzen (53) werden automatisch zusammengeführt, so daß der Programmcode (52) erstellt ist.

2. Verfahren nach Anspruch 1, wobei bei der Erzeugung der Funktionspläne (27) im Schritt b) eine Prüfung stattfindet, ob die zur Erzeugung der Funktionspläne (27) erforderlichen Informationen im Technologieplan (10) enthalten sind.

3. Verfahren nach Anspruch 2,
**dadurch gekennzeichnet, daß** genau ein Unterplan (27) aus genau einem Abschnitt (24; 25) generiert wird.

4. Verfahren nach Anspruch 3,
**dadurch gekennzeichnet, daß** jeder Abschnitt (24; 25) eine Reihe von Symbolen (21) umfaßt und jedes dieser Symbole (21) genau einem Baustein (32) des zugehörigen Unterplans (27) zugeordnet wird.

5. Verfahren nach einem der Ansprüche 1 bis 4,
**dadurch gekennzeichnet, daß** aus jedem Unterplan (27) genau eine Einzelsequenz (53) generiert wird.

6. Verfahren nach einem der Ansprüche 2 bis 5,
**dadurch gekennzeichnet, daß** zur besseren Übersichtlichkeit mehrere Symbole (21) und/oder mehrere Abschnitte (24, 25) des Technologieplans (10) kombiniert und zu einem Plansymbol (23) zusammengefaßt werden.

7. Verfahren nach einem der Ansprüche 1 bis 6,
**dadurch gekennzeichnet, daß** in dem Technologieplan (10) enthaltene Symbole (21) mit einer Identifikation (36) versehen werden.

8. Verfahren nach einem der Ansprüche 1 bis 7,
**dadurch gekennzeichnet, daß** der Technologieplan (10) einer Plausibilitätsprüfung unterzogen wird.

9. Verfahren nach einem der Ansprüche 1 bis 8,
**dadurch gekennzeichnet, daß** eine Konsistenzprüfung zwischen den einzelnen Unterplänen (27) und zwischen den Unterplänen (27) und dem Technologieplan (10) vorgenommen wird.

10. Verfahren nach einem der Ansprüche 1 bis 9,
**dadurch gekennzeichnet, daß** der Technologieplan (10) mit mindestens einer Schnittstelle (72; 73) zum Verbinden mit anderen Engineeringsystemen (70, 71, 81) versehen wird.

11. Verfahren nach Anspruch 10,
**dadurch gekennzeichnet, daß** Informationen aus anderen Engineeringsystemen (70, 71) in den Technologieplan (10) importiert werden.

12. Verfahren nach Anspruch 10 oder 11,
**dadurch gekennzeichnet, daß** Informationen aus dem Technologieplan (10) zu anderen Engineeringsystemen (81) exportiert werden.

13. Verfahren nach einem der Ansprüche 1 bis 12,
**dadurch gekennzeichnet, daß** in dem Technologieplan (10) enthaltene Informationen graphisch dargestellt werden.

14. Verfahren nach Anspruch 13,
**dadurch gekennzeichnet, daß** zur Darstellung der Informationen graphische Symbole (21) in den Technologieplan (10) importiert werden.

15. Verfahren nach Anspruch 13 oder 14,
**dadurch gekennzeichnet, daß** nur ein Teil (I) der in dem Technologieplan (10) enthaltenen Informationen graphisch dargestellt wird.

16. Verfahren nach einem der Ansprüche 1 bis 15,
**dadurch gekennzeichnet, daß** in den Technologieplan (10) nur ein Teil der zum vollständigen Generieren der Unterpläne (27) und Einzelsequenzen (53) erforderlichen Informationen aufgenommen wird.

17. Verfahren nach Anspruch 16,
**dadurch gekennzeichnet, daß** beim Generieren der Unterpläne (27) Lücken (III) der in dem Technologieplan (10) enthaltenen Informationen erkannt und angezeigt werden.

## Claims

1. Method for automatically producing a program code (52) for instrumentation and control for operating an installation with process-engineering components (14, 15, 16, ...,20), where a machine-readable technology diagram (10) for the installation is provided which contains both a graphical diagram (11) of the process engineering and a further graphical diagram (12) of the program code (52), the further diagram (12) being divided into a number of sections (24, 25) which each comprise one or more interlinked symbols (21) which schematically represent the program code (52) which is to be produced, **characterized by** the following steps:
a) each symbol (21a, 21b, 21c) in a section (24, 25) is automatically assigned a functional module (32a, 32b, 32c), where the links between the symbols (21a, 21b, 21c) are automatically used to stipulate the links between the functional modules (32a, 32b, 32c), so that a function diagram (27) for the section (24, 25) of the further diagram (12) is formed from the functional modules (32a,-32b, 32c) and their links,
b) in accordance with step a), a respective individual sequence (53) of the program code (52) is automatically produced for each section (24, 25),
c) each function diagram (27) is automatically used to produce a respective individual sequence (53) of the program code (52), and
d) the individual sequences (53) are automatically put together, so that the program code (52) is produced.

2. Method according to Claim 1, where production of the function diagrams (27) involves a check being carried out in step b) to determine whether the information required for producing the function diagrams (27) is contained in the technology diagram (10).

3. Method according to Claim 2,
**characterized in that** precisely one subdiagram (27) is generated from precisely one section (24; 25).

4. Method according to Claim 3,
**characterized in that** each section (24;25) comprises a series of symbols (21), and each of these symbols (21) is assigned to precisely one module (32) of the associated subdiagram (27).

5. Method according to one of Claims 1 to 4,
**characterized in that** precisely one individual sequence (53) is generated from each subdiagram (27).

6. Method according to one of Claims 2 to 5,
**characterized in that**, to improve clarity, a plurality of symbols (21) and/or a plurality of sections (24, 25) of the technology diagram (10) are combined and put together to form a diagram symbol (23).

7. Method according to one of Claims 1 to 6,
**characterized in that** symbols (21) contained in the technology diagram (10) are provided with an identification (36).

8. Method according to one of Claims 1 to 7,
**characterized in that** the technology diagram (10) is subjected to a plausibility check.

9. Method according to one of Claims 1 to 8,
**characterized in that** a consistency check is carried out between the individual subdiagrams (27) and between the subdiagrams (27) and the technology diagram (10).

10. Method according to one of Claims 1 to 9,
**characterized in that** the technology diagram (10) is provided with at least one interface (72; 73) for connecting it to other engineering systems (70, 71, 81).

11. Method according to Claim 10,
**characterized in that** information is imported into the technology diagram (10) from other engineering systems (70, 71).

12. Method according to Claim 10 or 11,
**characterized in that** information is exported from the technology diagram (10) to other engineering systems (81).

13. Method according to one of Claims 1 to 12,
**characterized in that** information contained in the technology diagram (10) is shown graphically.

14. Method according to Claim 13,
**characterized in that**, to show the information, graphical symbols (21) are imported into the technology diagram (10).

15. Method according to Claim 13 or 14,
**characterized in that** only some (I) of the information contained in the technology diagram (10) is shown graphically.

16. Method according to one of Claims 1 to 15,
**characterized in that** only some of the information required for fully generating the subdiagrams (27) and individual sequences (53) is included in the technology diagram (10).

17. Method according to Claim 16,
**characterized in that** generation of the subdiagrams (27) involves the identification and display of gaps (III) in the information contained in the technology diagram (10).

## Revendications

1. Procédé d'élaboration automatique d'un code de programme (52) de la technique de contrôle de processus pour l'exploitation d'une installation comportant des éléments technologiques de procédés industriels (14, 15, 16, ..., 20), un plan technologique (10) de l'installation étant prévu, lequel plan peut être lu par une machine et contient aussi bien un plan graphique (11) de la technologie de procédés industriels qu'un autre plan graphique (12) du code de programme (52), l'autre plan (12) étant divisé en un certain nombre de sections (24, 25) qui comprennent chacune un ou plusieurs symboles (21) qui sont combinés entre eux et qui représentent schématiquement le code de programme à élaborer (52), **caractérisé par** les étapes suivantes :
a) on associe automatiquement un module fonctionnel (32a, 32b, 32c) à chaque symbole (21 a, 21 b, 21c) d'une section (24, 25), la combinaison des modules fonctionnels (32a, 32b, 32c) étant spécifiée automatiquement à partir de la combinaison des symboles (21 a, 21 b, 21c) de telle sorte qu'un schéma logique (27) de la section (24, 25) de l'autre plan (12) est formé à partir des modules fonctionnels (32a, 32b, 32c) et de leurs combinaisons,
b) selon l'étape a), on produit automatiquement une séquence individuelle (53) du code de programme (52) pour chaque section (24, 25),
c) à partir de chaque schéma logique (27), on produit automatiquement une séquence individuelle (53) du code de programme (52), et
d) on rassemble automatiquement les séquences individuelles (53) de telle sorte que le code de programme (52) est élaboré.

2. Procédé selon la revendication 1, dans lequel, lors de la production des schémas logiques (27) à l'étape b), un contrôle a lieu pour savoir si les informations nécessaires à la production des schémas logiques (27) sont contenues dans le plan technologique (10).

3. Procédé selon la revendication 2, **caractérisé par le fait qu'**on produit exactement un sous-plan (27) à partir d'exactement une section (24 ; 25).

4. Procédé selon la revendication 3, **caractérisé par le fait que** chaque section (24 ; 25) comprend une série de symboles (21) et chacun de ces symboles (21) est associé exactement à un module (32) du sous-plan (27) associé.

5. Procédé selon l'une des revendications 1 à 4, **caractérisé par le fait qu'**on produit exactement une séquence individuelle (53) à partir de chaque sous-plan (27).

6. Procédé selon l'une des revendications 2 à 5, **caractérisé par le fait que**, pour plus de clarté, on combine plusieurs symboles (21) et/ou plusieurs sections (24, 25) du plan technologique (10) et on les rassemble en un symbole de plan (23).

7. Procédé selon l'une des revendications 1 à 6, **caractérisé par le fait qu'**on munit d'un identificateur (36) des symboles (21) contenus dans le plan technologique (10).

8. Procédé selon l'une des revendications 1 à 7, **caractérisé par le fait qu'**on soumet le plan technologique (10) à un contrôle de vraisemblance.

9. Procédé selon l'une des revendications 1 à 8, **caractérisé par le fait qu'**on effectue un contrôle de cohérence entre les différents sous-plans (27) et entre les sous-plans (27) et le plan technologique (10).

10. Procédé selon l'une des revendications 1 à 9, **caractérisé par le fait qu'**on munit le plan technologique (10) d'au moins une interface (72 ; 73) pour la liaison avec d'autres systèmes d'ingénierie (70, 71, 81).

11. Procédé selon la revendication 10, **caractérisé par le fait qu'**on importe des informations d'autres systèmes d'ingénierie (70, 71) dans le plan technologique (10).

12. Procédé selon la revendication 10 ou 11, **caractérisé par le fait qu'**on exporte des informations du plan technologique (10) vers d'autres systèmes d'ingénierie (81 ).

13. Procédé selon l'une des revendications 1 à 12, **caractérisé par le fait qu'**on représente graphiquement des informations contenues dans le plan technologique (10).

14. Procédé selon la revendication 13, **caractérisé par le fait que**, pour la représentation des informations, on importe des symboles graphiques (21) dans le plan technologique (10).

15. Procédé selon la revendication 13 ou 14, **caractérisé par le fait qu'**on représente graphiquement seulement une partie (1) des informations contenues dans le plan technologique (10).

16. Procédé selon l'une des revendications 1 à 15, **caractérisé par le fait que**, dans le plan technologique (10), on reprend seulement une partie des informations nécessaires à la production complète des sous-plans (27) et des séquences individuelles (53).

17. Procédé selon la revendication 16, **caractérisé par le fait que**, lors de la génération des sous-plans (27), on détecte et affiche des vides (III) des informations contenues dans le plan technologique (10).
